# EUROPEAN PATENT APPLICATION

(11) **EP 1 364 749 A1**
(43) Date of publication of application: **26.11.2003**
(21) Application number: 03011297.3
(22) Date of filing: 19.05.2003
(51) Int. Cl.: B24B 55/04, B24B 23/02, F16P 1/02

(54) **Device for holding an angle grinder and for supporting and locking a covering element for the abrasive grinding wheel**

(30) Priority: 23.05.2002 IT VI20020107
(71) Applicant: BOSS EQUIPMENT S.R.L., 36030 Sarcedo (Vicenza) (IT)
(72) Inventor: Galvan, Fortunato, 36016 Thiene (Vicenza) (IT)
(74) Representative: Bettello, Pietro, Dott. Ing.

(57) **Abstract**

Device for supporting and locking the covering element of the abrasive grinding wheel of an angular sander combined with a tool which transforms said sander into a fixed abrasive cut-off machine. The device substantially consists of two components and specifically of a bracket (4) and a pin (10), removably connected together; the bracket (4) consists of a substantially L-shaped profile, in which one wing (5) anchors onto the fixed or mobile element (2) which supports the apparatus, whereas the other wing (9) acts as a support for the pin (11) on which the safety guard, which acts as a covering element (3) for the grinding wheel for safety reasons, is fitted.

## Description

The present finding regards a device for supporting and locking the covering element of the abrasive grinding wheel of an angular sander combined with a tool which transforms said sander into a fixed cut-off machine.

Tools which comprise an abrasive grinding wheel applied onto a body containing an electric motor, suitable for determining the rotation of the grinding wheel itself about its horizontal axis, are well known.

The body of the tool is hinged, with a horizontal axis, to a base, so as to be able to adapt the heights of the grinding wheel to the size of the piece upon which one has to operate, as well as to allow the grinding wheel to make the necessary movements to carry out the cutting action.

Of course, since the grinding wheel is a moving tool and thus potentially dangerous to the safety of the user, suitable safety measures are foreseen, suitable for avoiding accidental contact of the fingers or other parts of the operator's body with the surface of the rotating grinding wheel.

A cover, often known as a "safety guard", is foreseen as a safety element, which covers the edge of the grinding wheel for about half of the circumference of the grinding wheel and it is fixed to the base which supports the tool.

In the current state of the art the safety guard is fixed to the base in different ways, all traceable to the use of mobile connections (as an example we quote patent document no. 85.629A89), which display at least two drawbacks:
- they do not keep the safety guard in the correct position when, accidentally, there is a loosening of the threaded lock;
- they do not allow the adjustment of the position of the safety guard in relation to the diameter of the grinding wheel and/or to the size of the body of the tool.

The purpose of the present finding is that of foreseeing a device for supporting and locking the covering element of the abrasive grinding wheel in a tool equipped with said grinding wheel and, specifically, in an angular sander coupled with a tool which transforms said sander into a fixed cut-off machine which eliminates such drawbacks. In particular it must prevent the safety guard from vibrating in case the locking screws loosen (as expressly required by safety regulations).

A further purpose of the finding is that of foreseeing a device of the covering element of the abrasive grinding wheel which is simple and cost-effective to realise.

Such purposes are accomplished with a device substantially consisting of two components, a bracket and a pin, removably connected together.

Constructively, the bracket is a substantially L-shaped profile, in which one wing anchors onto the fixed or mobile element which supports the apparatus and the other wing acts as a support for the pin on which the safety guard is fitted.

A first characteristic of the finding foresees that the safety guard, as well as being fitted, at one end thereof, on a horizontal pin, also realises a tenon and mortice type clamping, which prevents the safety guard from being able to rotate about the axis of its pin.

A second characteristic of the finding concerns the attachment between the pin and the support bracket thereof, which is realised through the clamping of a portion of the tenon of the pin in a first slot made on the wing of the bracket, so as to prevent the rotation of the pin and, consequently also of the safety guard, in the case of loosening of the locking nut of the pin on the wing itself.

Moreover, such a first slot is rhombus shaped with a vertical axis, for which reason it allows the locking of the pin at different heights and thus the positioning of the safety guard, higher or lower, according to the diameter of the abrasive grinding wheel.

Finally, the finding foresees that the hole made on the other wing of the bracket, to allow the passage of the locking screw of the bracket on the tool-holder plate, be a rhombus-shaped slot with a horizontal axis, so as to allow the bracket more or less lateral displacement according to the width of the body of the tool used.

The finding shall now be illustrated in a preferred embodiment, given as a non-limiting example, with the help of the attached tables of drawings, where:
- fig. 1 represents the perspective view of a base with the safety guard equipped with the device according to the finding;
- fig. 2 represents a perspective view of the device according to the finding in a work step of the tool;
- fig. 3 represents an exploded perspective view of the elements which make up the device according to the finding;
- figs. 4 to 6 represent the successive steps of the assembly of the device on the safety guard.

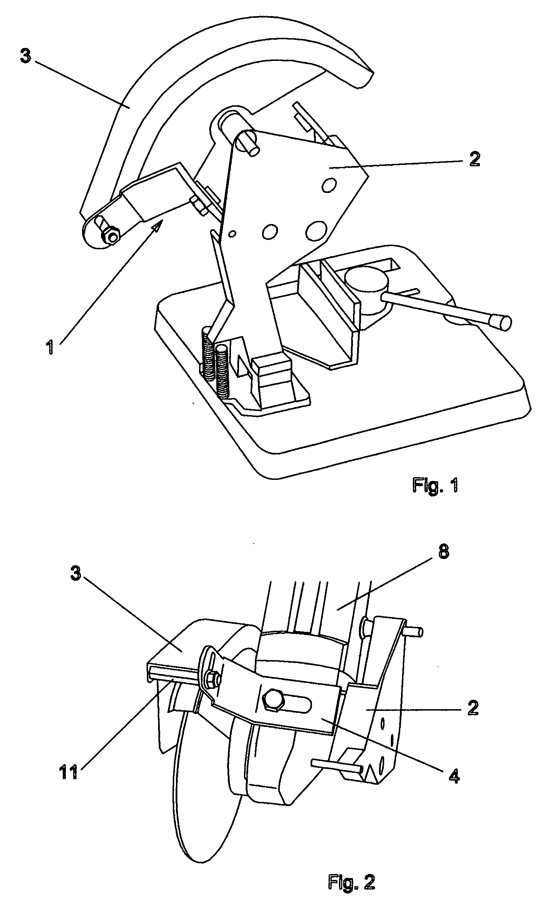

As can be seen in fig. 1, the device according to the finding, wholly indicated with 1, is placed between the plate 2 of the base and the safety guard 3.

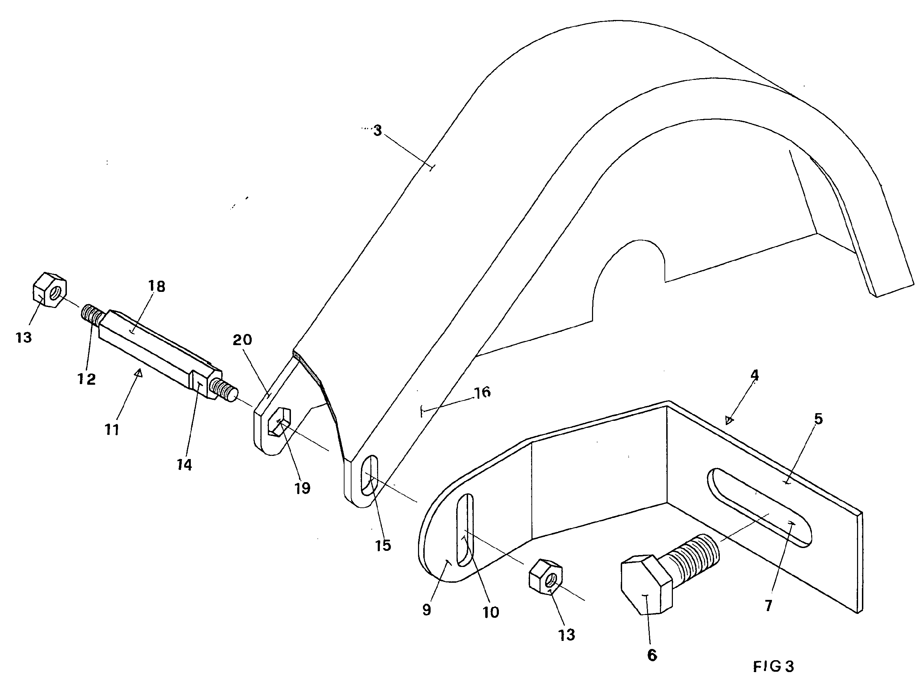

As can be seen in figs. 2 and 3, the device 1 comprises an L-shaped bracket 4, with one wing 5 locked, through the threaded bolt 6 and the slot 7, on the plate which supports the tool 8, whereas on the other wing 9 the pin 11, on which the safety guard 3 is fitted, is clamped through the slot 10.

As can be seen in fig. 3 and thereafter, the pin 11, as well as the two threaded ends 12, to allow the screwing in of the locking nuts 13, has a key 14, which penetrates in the coaxial slot 15 made on the shoulder 16 of the safety guard 3, so as to realise a tenon and mortice type clamping which prevents the rotation of the safety guard on the pin.

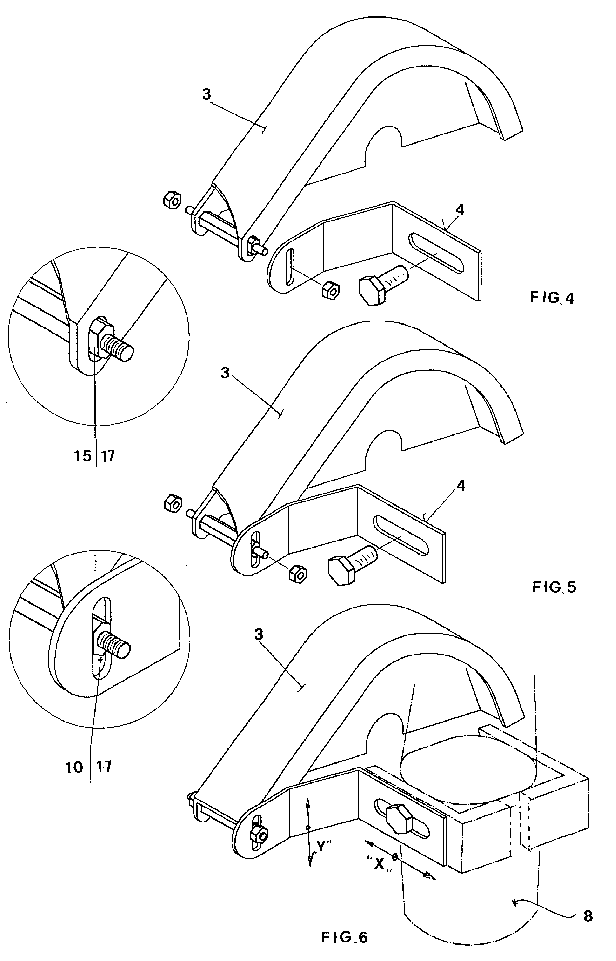

Moreover, the length of the key 14 is such that, after having assembled the pin on the safety guard, it protrudes from the shoulder 16 with a portion 17 which engages in the slot 10 of the bracket, thus preventing the mutual rotation between the bracket and the pin/safety guard (see the details of figures 4 and 5).

In a preferred embodiment the body 18 of the pin 11 has a polygonal section which acts, when it is inserted in the corresponding hole 19 of the shoulder 20 of the safety guard, to keep the two pieces locked together.

Finally, as can be seen in fig. 6, the two slots 7 and 10, made on the two wings of the bracket, consist of rhombuses with respectively horizontal and vertical axes, so as to allow the lateral displacement for adjusting the bracket (see arrow "X") and the vertical displacement for adjusting the safety guard (see arrow "Y").

It should be specified that the shapes of the bracket and of the pin can be different from that which is illustrated in the figures, maintaining the essential characteristics of the finding, defined by the claims listed hereafter, without for this reason departing from the scope of the patent.

## Claims

1. DEVICE FOR SUPPORTING AND LOCKING THE COVERING ELEMENT OF THE ABRASIVE GRINDING WHEEL OF AN ANGULAR EMERY MACHINE COUPLED WITH A TOOL WHICH TRANSFORMS SAID EMERY MACHINE INTO A FIXED ABRASIVE CUTOFF MACHINE, said tool comprising an abrasive rotary grinding wheel applied on a body containing an electric motor, suitable for determining the rotation of the grinding wheel itself about its horizontal axis, the body of said tool being hinged, with a horizontal axis, to a base, so as to be able to adapt the height of the grinding wheel to the size of the piece upon which one must operate, as well as to allow the grinding wheel to make the necessary movements to carry out the cutting action, foreseeing, as a safety element, a cover, often known as a "safety guard", which covers the edge of the grinding wheel for about half of the circumference of the grinding wheel and is fixed to the base which supports the tool,
said device being **characterised in that**
it substantially consists of two components, a bracket and a pin, removably connected together, the bracket consisting of a substantially L-shaped profile, in which one wing anchors onto the fixed or mobile element which supports the apparatus, the other wing acting as a support for the pin on which the safety guard is fitted.

2. DEVICE, according to claim 1, **characterised in that** the safety guard, as well as being fitted onto a horizontal pin, realises with said pin a tenon and mortice type clamping, which prevents the safety guard itself from being able to rotate about the axis of the pin.

3. DEVICE, according to claims 1 and 2, **characterised in that** the attachment between the pin and the support bracket thereof takes place through the clamping of a portion of the tenon of the pin in a slot made on the wing of the bracket, so as to prevent the rotation of the pin itself and of the safety guard, in the case of loosening of the locking nuts.

4. DEVICE, according to claim 3, **characterised in that** the slot is rhombus-shaped with a vertical axis, for which reason it allows the locking of the pin at different heights and thus the positioning of the safety guard, according to the diameter of the abrasive grinding wheel.

5. DEVICE, according to one or more of the previous claims, **characterised in that** the hole made on the other wing of the bracket, to allow the passage of the locking screw of the bracket on the tool-holder plate, is a rhombus-shaped slot with a horizontal axis, so as to allow the bracket lateral movement, according to the width of the body of the tool used.

6. DEVICE, according to one or more of the previous claims, placed between the plate (2) of the base and the safety guard (3) **characterised in that** it comprises a substantially L-shaped bracket(4), with one wing (5) locked, through the threaded bolt (6) and the slot (7), on the plate which supports the tool (8), whereas the pin (11), on which the safety guard (3) is fitted, clamps onto the other wing (9) through the slot (10).

7. DEVICE, according to claim 6, **characterised in that** the pin (11), equipped with the two threaded ends (12) for screwing in the locking nuts (13), has a key (14), which penetrates in the coaxial slot (15) made on the shoulder (16) of the safety guard (3), so as to realise a tenon and mortice type clamping.

8. DEVICE, according to claim 7, **characterised in that** the length of the key (14) is such that it protrudes from the shoulder (16) with a portion (17) thereof, which engages in the slot (10) of the bracket.

9. DEVICE, according to one or more of the previous claims, **characterised in that** the body (18) of the pin (11) has a polygonal section.
